# EUROPÄISCHE PATENTSCHRIFT

(11) **EP 3 705 692 B1**
(45) Veröffentlichungstag und Bekanntmachung des Hinweises auf die Patenterteilung: **07.12.2022**
(21) Anmeldenummer: 20159677.2
(22) Anmeldetag: 27.02.2020
(51) Int. Cl.: F01N 3/022, F01N 3/28, B23P 23/00

(54) **KOMPRIMIERBACKENBAUGRUPPE**
PRESS JAW ASSEMBLY
GROUPE DE MÂCHOIRES DE COMPRESSION

(30) Priorität: 04.03.2019 DE 102019105322
(43) Veröffentlichungstag der Anmeldung: 09.09.2020
(73) Patentinhaber: Purem GmbH, 66539 Neunkirchen (DE)
(72) Erfinder: Günther, Max, 01097 Dresden (DE); Rudolph, Karsten, 01259 Dresden (DE); Zschippang, Thomas, 01640 Coswig (DE); Peter, Sebastian, 09599 Freiberg (DE)
(74) Vertreter: Ruttensperger Lachnit Trossin Gomoll

(56) Entgegenhaltungen:
- DE-A1- 10 018 804
- JP-A- H0 381 517
- US-A- 4 667 386
- US-B1- 6 405 437

## Beschreibung

Die vorliegende Erfindung betrifft eine Komprimierbackenbaugruppe, die in einer Komprimiervorrichtung beim Komprimieren rohrartiger Metallteile eingesetzt werden kann.

Bei der Herstellung von in Abgasanlagen von Brennkraftmaschinen zu integrierenden Abgasbehandlungsanordnungen, wie zum Beispiel Katalysatoren oder Partikelfiltern, werden im Allgemeinen monolithisch aufgebaute und beispielsweise mit katalytisch wirksamem Material beschichtete Abgasbehandlungseinheiten mit aus Fasermaterial aufgebauten Lagermatten umwickelt und in rohrartig, also im Wesentlichen zylindrisch ausgebildete und aus Metall- bzw. Blechmaterial aufgebaute Gehäuse eingeschoben. Durch die dabei entstehende Kompression der Lagermatten wird eine definierte Positionierung der Abgasbehandlungseinheiten in den diese aufnehmenden Gehäusen erreicht. Diese Kompression der Lagermatten kann beispielsweise nach dem Positionieren der damit umwickelten Abgasbehandlungseinheiten in den diese aufnehmenden Gehäusen dadurch noch verstärkt werden, dass diese Gehäuse von außen komprimiert werden. Auch können derartige Gehäuse vor dem Einsetzen der Abgasbehandlungseinheiten durch radiale Kompression verformt und dadurch mit hoher Präzision auf ein zur Aufnahme der Abgasbehandlungseinheiten vorzusehendes Sollmaß bzw. in eine Sollform gebracht werden.

Zur Erzeugung dieser Verformung durch radiale Kompression werden die Gehäuse in mit einer Mehrzahl von Komprimierbackenbaugruppen aufgebaute Komprimiervorrichtungen eingespannt. Die in Umfangsrichtung um den Außenumfang eines eingespannten Gehäuses aufeinanderfolgend angeordneten Komprimierbackenbaugruppen werden zum Komprimieren des Gehäuses nach radial innen bewegt und pressen somit von außen auf das Gehäuse und verformen dieses dabei in radialer Richtung. Um eine derartige Bewegung der Komprimierbackenbaugruppen nach radial innen zu ermöglichen, ist es erforderlich, dass zwischen den einzelnen Komprimierbackenbaugruppen zumindest in einem Ausgangszustand vor der Bewegung nach radial innen ein Umfangsabstand besteht, so dass einander in Umfangsrichtung benachbarte Komprimierbackenbaugruppen sich bei der Bewegung nach radial innen nicht gegenseitig blockieren.

Dieser zwischen den Komprimierbackenbaugruppen bestehende Umfangsabstand bringt die Gefahr mit sich, dass bei der radialen Belastung von z.B. mit Blechmaterial aufgebauten Gehäusen im Bereich dieser Umfangsabstände Falten, Störkonturen oder Formabweichungen in den so behandelten Gehäusen entstehen. Die Gefahr derartiger ungewollter Effekte bei der radialen Belastung der Gehäuse kann dadurch verringert werden, dass vergleichsweise dickes Aufbaumaterial für diese Gehäuse verwendet wird, was auch unter Berücksichtigung des Umstandes, dass derartig dickes Aufbaumaterial für den Betrieb und die Funktionsfähigkeit der damit aufgebauten Abgasbehandlungseinheiten an sich nicht erforderlich ist, zu erhöhten Herstellungskosten führt.

Eine Komprimierbackenbaugruppe gemäß dem Oberbegriff des Anspruchs 1 ist aus der JP H03 81517 A bekannt. Bei dieser bekannten Komprimierbackenbaugruppe sind zwei beidseits einer feststehenden Komprimierbacke angeordnete bewegbare Komprimierbacken vermittels eines mit diesen gekoppelten Zylinders um jeweilige Schwenkachsen bezüglich der feststehenden Komprimierbacke verschwenkbar.

Es ist die Aufgabe der vorliegenden Erfindung, eine Komprimierbackenbaugruppe für eine Komprimiervorrichtung zum Komprimieren rohrartiger Metallteile, insbesondere für Abgasanlagen von Brennkraftmaschinen, bzw. eine mit einer Mehrzahl derartiger Komprimierbackenbaugruppen aufgebaute Komprimiervorrichtung vorzusehen, welche eine präzise Kompressionsverformung rohrartiger Metallteile bei verminderter Gefahr der Erzeugung ungewünschter Verformungen ermöglichen.

Erfindungsgemäß wird diese Aufgabe gelöst durch eine Komprimierbackenbaugruppe für eine Komprimiervorrichtung zum Komprimieren rohrartiger Metallteile, umfassend:
- einen Komprimierbackenträger,
- wenigstens eine an dem Komprimierbackenträger vorgesehene Komprimierbacke mit einer im Wesentlichen vom Komprimierbackenträger abgewandt orientierten, in einer Komprimierbacken-Querrichtung quer zu einer Komprimierbacken-Längsrichtung gekrümmten Komprimierfläche.

Die Komprimierbacke umfasst ein an dem Komprimierbackenträger feststehendes, ein Komprimierflächensegment bereitstellendes festes Komprimierbackensegment und wenigstens ein ein Komprimierflächensegment bereitstellendes bewegbares Komprimierbackensegment, wobei das wenigstens eine bewegbare Komprimierbackensegment bezüglich des festen Komprimierbackensegments gegen die Vorspannwirkung einer Vorspannanordnung in einer Bewegungsrichtung bewegbar ist.

Durch das Bereitstellen der Komprimierbacke mit einer Mehrzahl von bezüglich einander bewegbaren Komprimierbackensegmenten kann der zum Ermöglichen einer Radialbewegung der Komprimierbackenbaugruppen beim Komprimieren eines rohrartigen Metallgehäuses erforderliche Umfangsabstand nicht nur auf zwischen einzelnen Komprimierbackenbaugruppen vorzusehende Teil-Umfangsabstände aufgeteilt werden, sondern ein Teil dieses insgesamt erforderlichen Umfangsabstandes wird in den einzelnen Komprimierbackenbaugruppen zwischen den bezüglich einander bewegbaren Komprimierbackensegmenten vorgehalten. Dies führt dazu, dass über den gesamten Umfang verteilt eine größere Anzahl für sich jeweils kleiner dimensionierter Teil-Umfangsabstände entsteht. Die Gefahr, dass bei der radialen Beaufschlagung eines rohrartigen Metallgehäuses im Bereich derartiger vergleichsweise kleiner Teil-Umfangsabstände, also in Bereichen, in welchen bei der radialen Belastung das Metallgehäuse zunächst nicht durch Bereiche der Kompressionsbacken beaufschlagt ist, ungewünschte Verformungen durch eine Ausweichbewegung des zu verformenden Metallgehäuses entstehen, ist somit deutlich gemindert. Dies gestattet es, beispielsweise bei der Herstellung von Abgasbehandlungsvorrichtungen, wie zum Beispiel Katalysatoren oder Partikelfiltern, rohrartige Metallgehäuse mit deutlich geringerer Wandungsstärke einzusetzen, was zu verminderten Herstellungskosten und insbesondere auch einem geringeren Gewicht führt. Auch gestattet der Einsatz erfindungsgemäß aufgebauter Komprimierbackenbaugruppen aufgrund der Bewegbarkeit der Komprimierbackensegmente bezüglich einander die Bearbeitung von rohrartigen Metallteilen mit komplexeren, von einer kreisrunden Geometrie abweichenden Umfangsstrukturen, wie zum Beispiel ovalen oder elliptischen Gehäusen.

Um eine definierte Verteilung der vorangehend angesprochenen Teil-Umfangsabstände in Umfangsrichtung um ein zu komprimierendes rohartiges

Metallteil zu unterstützen, wird vorgeschlagen, dass das feste Komprimierbackensegment und das wenigstens eine bewegbare Komprimierbackensegment in der Komprimierbacken-Querrichtung aufeinanderfolgend angeordnet sind.

Insbesondere kann dabei für eine bei der Radialverlagerung einer Komprimierbackenbaugruppe im Wesentlichen symmetrische Wirkungsweise in Umfangsrichtung vorgesehen sein, dass in der Komprimierbacken-Querrichtung an jeder Seite des festen Komprimierbackensegments wenigstens ein bewegbares Komprimierbackensegment angeordnet ist.

Wenn durch die Vorspannanordnung das wenigstens eine bewegbare Komprimierbackensegment in der Bewegungsrichtung von dem festen Komprimierbackensegment weg vorgespannt ist, ist sichergestellt, dass bei der Verlagerung nach radial innen die Komprimierbackensegmente einander angenähert werden können.

Zum Erhalt einer definierten Vorspannwechselwirkung zwischen den verschiedenen Komprimierbackensegmenten kann die Vorspannanordnung in Zuordnung zu jedem bewegbaren Komprimierbackensegment wenigstens ein dieses in Richtung vom festen Komprimierbackensegment weg beaufschlagendes Vorspannelement umfassen.

Hierzu kann vorgesehen sein, dass zwischen dem festen Komprimierbackensegment und wenigstens einem, vorzugsweise jedem in der Komprimierbacken-Querrichtung diesem benachbarten bewegbaren Komprimierbackensegment wenigstens ein an dem festen Komprimierbackensegment und dem wenigstens einen benachbarten bewegbaren Komprimierbackensegment sich abstützendes Vorspannelement vorgesehen ist.

Eine definierte Positionierung bzw. Halterung der Vorspannelemente zwischen den durch diese beaufschlagten Komprimierbackensegmenten kann beispielsweise dadurch erreicht werden, dass in dem festen Komprimierbackensegment oder/und dem wenigstens einen benachbarten bewegbaren Komprimierbackensegment eine in der Komprimierbacken-Längsrichtung langgestreckte, das wenigstens eine an dem festen Komprimierbackensegment und dem wenigstens einen benachbarten bewegbaren Komprimierbackensegment sich abstützende Vorspannelement teilweise aufnehmende Vorspannelement-Aufnahmeeinsenkung vorgesehen ist.

Um eine definierte Bewegung der Komprimierbackensegmente bezüglich einander zu erreichen, wird vorgeschlagen, dass dem wenigstens einen bewegbaren Komprimierbackensegment eine dieses zur Bewegung bezüglich des festen Komprimierbackensegments in der Bewegungsrichtung führende Komprimierbackensegment-Führungsformation zugeordnet ist.

Eine zuverlässige Führungsfunktion kann bei einfach zu realisierendem Aufbau beispielsweise dadurch gewährleistet werden, dass die Führungsformation wenigstens ein an dem festen Komprimierbackensegment im Wesentlichen in der Bewegungsrichtung sich erstreckend getragenes Führungselement und in dem wenigstens einen bewegbaren Komprimierbackensegment in Zuordnung zu dem wenigstens einen Führungselement eine dieses in der Bewegungsrichtung bewegbar aufnehmende Führungsöffnung umfasst, oder/und dass die Führungsformation eine das wenigstens eine bewegbare Komprimierbackensegment an seiner von der Komprimierfläche abgewandten Rückseite stützende Stützfläche umfasst. Insbesondere kann dabei vorgesehen sein, dass die Führungsformation wenigstens zwei in der Komprimierbacken-Längsrichtung oder/und einer zur Komprimierbacken-Querrichtung und zur Komprimierbacken-Längsrichtung orthogonalen Komprimierbacken-Radialrichtung in Abstand zueinander angeordnete Führungselemente umfasst.

Der Komprimierbackenträger kann eine Trägerplatte umfassen, an der das feste Komprimierbackensegment fest getragen ist.

Eine in Umfangsrichtung gleichmäßige Wirkcharakteristik der Komprimierbackenbaugruppe kann dadurch unterstützt werden, dass die Komprimierbacke bezüglich einer zur Komprimierbacken-Querrichtung orthogonalen Komprimierbacken-Mittenebene hinsichtlich der Ausgestaltung der Komprimierbackensegmente im Wesentlichen spiegelsymmetrisch ausgebildet ist.

Insbesondere dann, wenn mit einer erfindungsgemäß aufgebauten Komprimierbackenbaugruppe rohrartige Metallteile mit im Wesentlichen zylindrischer Umfangskontur, also in einer Längsrichtung derartiger Metallteile im Wesentlichen unveränderter Querschnittsabmessung bzw. Querschnittsgeometrie, komprimiert werden sollen, ist es vorteilhaft, wenn die Komprimierfläche in der Komprimierbacken-Längsrichtung nicht gekrümmt ist.

Um bei einer Radialbewegung einer Komprimierbackenbaugruppe zum Komprimieren eines rohrartigen Metallteils definiert eine Verlagerung der Komprimierbackensegmente bezüglich einander herbeizuführen, wird vorgeschlagen, dass wenigstens ein, vorzugsweise jedes bewegbare Komprimierbackensegment an seiner von dem festen Komprimierbackensegment in der Komprimierbacken-Querrichtung abgewandt liegenden Seite eine bezüglich eines Krümmungsmittelpunktes der Komprimierfläche im Wesentlichen radial sich erstreckende und in der Komprimierbacken-Längsrichtung sich erstreckende Abstützfläche zur Abstützung an einem bewegbaren Komprimierbackensegment einer Komprimierbacke einer benachbarten Komprimierbackenbaugruppe aufweist. Im Zuge der Radialbewegung können einander unmittelbar benachbarte bewegbare Komprimierbackensegmente einander unmittelbar benachbarter Komprimierbackenbaugruppen mit ihren einander gegenüberliegenden Abstützflächen in Anlage aneinander kommen. Ist dieser Zustand erreicht, führt eine weitergehende Radialbewegung der Komprimierbackenbaugruppen dazu, dass die bewegbaren Komprimierbackensegmente im Wesentlichen in Umfangsrichtung bzw. tangential zu einer Umfangsrichtung auf das jeweils zugeordnete feste Komprimierbackensegment zu gezwungen werden.

Die vorliegende Erfindung betrifft ferner eine Komprimiervorrichtung zum Komprimieren rohrartiger Metallteile, insbesondere für eine Abgasanlage einer Brennkraftmaschine, umfassend eine Mehrzahl von in Umfangsrichtung um eine Komprimiervorrichtungslängsachse aufeinanderfolgend angeordneten und bezüglich der Komprimiervorrichtungslängsachse im Wesentlichen radial bewegbaren Komprimierbackenbaugruppen mit erfindungsgemäßem Aufbau.

Die Erfindung wird nachfolgend mit Bezug auf die beiliegenden Figuren detailliert beschrieben. Es zeigt:
- Fig. 1: in perspektivischer Ansicht eine Komprimiervorrichtung zum Komprimieren rohrartiger Metallteile mit einer Mehrzahl von Komprimierbackenbaugruppen;
- Fig. 2: in perspektivischer Ansicht eine Komprimierbackenbaugruppe.

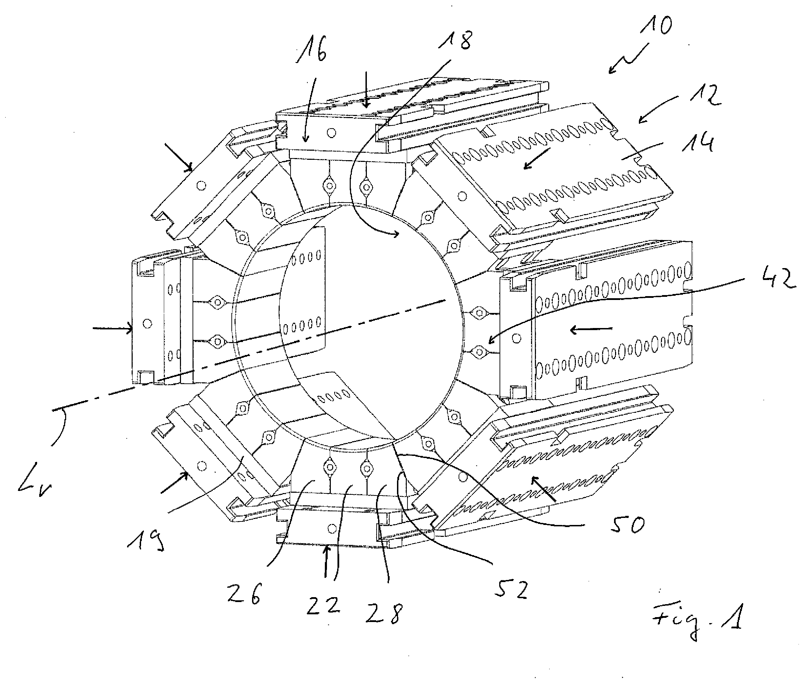

Die Fig. 1 zeigt in perspektivischer Ansicht einen wesentlichen Systembereich einer Komprimiervorrichtung 10, mit welcher rohrartige Metallteile durch radiale Beaufschlagung komprimiert werden können. Derartige rohrartige Metallteile können beispielsweise aus Blechmaterial aufgebaute, rohrartige Gehäuse sein, in welchen Abgasbehandlungseinheiten, wie z. B. Katalysatoren oder Partikelfilter, aufgenommen werden können. Durch das radiale Komprimieren derartiger Gehäuse können diese auf ein für die Aufnahme von Abgasbehandlungseinheiten geeignetes Sollmaß gebracht werden bzw. kann eine durch radiale Kompression erzeugte Haltewirkung für derartige Abgasbehandlungseinheiten verstärkt werden.

In dem in Fig. 1 dargestellten Ausgestaltungsbeispiel umfasst die Komprimiervorrichtung 10 acht in Umfangsrichtung aufeinanderfolgend angeordnete Komprimierbackenbaugruppen 12, die vorzugsweise zueinander baugleich sind. Jede der Komprimierbackenbaugruppen 12 umfasst einen plattenartigen Träger 14 mit einer daran getragenen Komprimierbacke 16. Jede Komprimierbacke 16 stellt an ihrer nach radial innen orientierten Seite eine Komprimierfläche 18 bereit, mit welcher ein zu komprimierendes rohrartiges Metallteil bei Verlagerung einer jeweiligen Komprimierbackenbaugruppe 12 nach radial innen beaufschlagt wird. Für diese Radialverlagerung können die Träger 14 der Komprimierbackenbaugruppen 12 an einem in den Figuren nicht dargestellten Bewegungsmechanismus festgelegt sein, durch welchen die Komprimierbackenbaugruppen 12 in definierter und aufeinander abgestimmter Art und Weise im Wesentlichen radial bezüglich der Komprimiervorrichtungslängsachse Lv verlagert werden können.

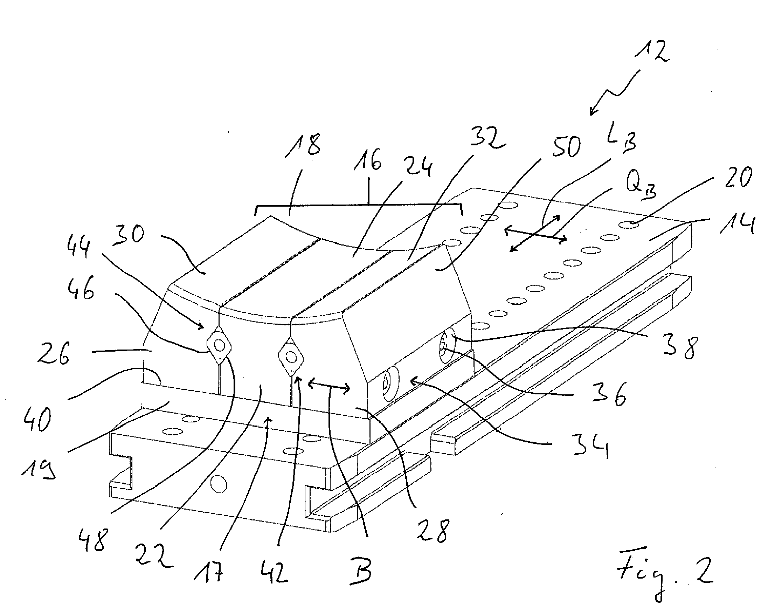

Die Fig. 2 zeigt detaillierter den Aufbau einer derartigen Komprimierbackenbaugruppe 12. An jedem Träger 14 ist eine Mehrzahl von Befestigungsöffnungen 20 vorgesehen, durch welche hindurch Befestigungsorgane, beispielsweise Schraubbolzen, zur Festlegung der zugeordneten Komprimierbacke 16 bzw. einer im Wesentlichen einen Komprimierbackenträger 17 bereitstellenden Trägerplatte 19 derselben hindurchgeführt werden können. Dabei können derartige Befestigungsorgane beispielsweise in die Trägerplatte 19 eingeschraubt werden und diese an der ausgewählten Positionierung in der Richtung der Komprimiervorrichtungslängsachse Lv festzulegen.

Die Komprimierbacke 16 umfasst ein an der Trägerplatte 19 festgelegtes festes Komprimierbackensegment 22. Das feste Komprimierbackensegment 22 kann an der Trägerplatte 19 beispielsweise durch Befestigungsorgane, also beispielsweise Schraubbolzen, festgelegt werden, könnte mit der Trägerplatte 19 aber auch integral, also als ein Materialblock, bereitgestellt werden. Das feste Komprimierbackensegment 22 stellt an seiner in der Komprimiervorrichtung 10 nach radial innen orientierten Seite ein Komprimierflächensegment 24 der Komprimierfläche 18 der Komprimierbacke 16 bereit. Dabei ist in den Figuren zu erkennen, dass die Komprimierfläche 18 in einer Komprimierbacken-Längsrichtung L_{B}, welche im Wesentlichen auch der Erstreckungsrichtung der Komprimiervorrichtungslängsachse Lv entspricht, nicht gekrümmt ist. Dies bedeutet, dass jede Schnittlinie zwischen einer die Komprimierbacken-Längsrichtung L_{B} enthaltenden Ebene mit der Komprimierfläche 16 einen ungekrümmten Verlauf aufweist. Die Komprimierfläche 16 ist jedoch in einer Komprimierbacken-Querrichtung Q_{B}, also im Wesentlichen orthogonal zur Komprimierbacken-Längsrichtung L_{B}, gekrümmt. Dies bedeutet, dass die Schnittlinie jeder die Komprimierbacken-Querrichtung Q_{B} enthaltenden Ebene mit der Komprimierfläche 18 einen gekrümmten Verlauf aufweist. Es ist darauf hinzuweisen, dass dies selbstverständlich voraussetzt, dass derartige die Komprimierfläche 18 schneidende Ebenen tatsächlich auch eine Schnittlinie mit der Komprimierfläche 18 aufweisen müssen, so dass eine derartige Ebene nicht gleichzeitig die Komprimierbacken-Längsrichtung L_{B} und die Komprimierbacken-Querrichtung Q_{B} enthalten kann.

Die Komprimierbacke 16 umfasst ferner beidseits des festen Komprimierbackensegments 22 jeweils ein bewegbares Komprimierbackensegment 26, 28, so dass in der Komprimierbacken-Querrichtung Q_{B} sich eine Abfolge von bewegbarem Komprimierbackensegment 26, festem Komprimierbackensegment 22 und bewegbarem Komprimierbackensegment 28 ergibt. Jedes bewegbare Komprimierbackensegment 26, 28 ist in einer Bewegungsrichtung B bezüglich des festen Komprimierbackensegments 22 bewegbar, wobei diese Bewegungsrichtung B vorzugsweise der Komprimierbacken-Querrichtung Q_{B} und, bezogen auf die Komprimiervorrichtungslängsachse Lv, im Wesentlichen einer Tangentialrichtung entspricht.

Jedes bewegbare Komprimierbackensegment 26, 28 weist an seiner nach radial innen orientierten Seite ein Komprimierflächensegment 30, 32 auf, so dass die Komprimierflächensegmente 24, 30, 32 in ihrer Gesamtheit die in der Komprimierbacken-Querrichtung Q_{B} gekrümmte Komprimierfläche 18 der Komprimierbacke 16 bereitstellen. Beispielsweise kann die Krümmung derart sein, dass bei unmittelbar aneinander angrenzender Positionierung der Komprimierbackensegmente 26, 22, 28 die so bereitgestellte Komprimierfläche 18 kreisartig mit im Wesentlichen konstantem Krümmungsradius gekrümmt ist, so dass bei derartiger Ausgestaltung auch jedes Komprimierflächensegment 24, 30, 32 kreisartig mit im Wesentlichen konstantem, insbesondere zueinander gleichem Krümmungsradius gekrümmt ist. Unabhängig von der Krümmungsgeometrie der einzelnen Komprimierflächensegmente 24, 30, 32 kann die durch diese bereitgestellte Komprimierfläche 18 spiegelsymmetrisch sein zu einer die Komprimiervorrichtungslängsachse L enthaltenden und das feste Komprimierbackensegment 22 zentral schneidenden Symmetrieebene.

Um eine definierte Bewegung der bewegbaren Komprimierbackensegmente 26, 28 bezüglich des festen Komprimierbackensegments 22 zu erreichen, ist in Zuordnung zu jedem der bewegbaren Komprimierbackensegmente 26, 28 eine allgemein mit 34 bezeichnete Führungsformation vorgesehen. Die Führungsformation 34 umfasst, wie beispielsweise im Zusammenhang mit dem bewegbaren Komprimierbackensegment 28 erkennbar, zwei in der Komprimierbacken-Längsrichtung L_{B} in Abstand zueinander angeordnete, bolzen- oder stabartige Führungselemente 36 sowie eine diese jeweils aufnehmende Führungsöffnung 38. Beispielsweise können diese Führungselemente 36 durch im Wesentlichen in der Komprimierbacken-Querrichtung Q_{B} bzw. der Bewegungsrichtung B sich vom festen Komprimierbackensegment 22 erstreckende und am festen Komprimierbackensegment 22 beispielsweise durch Gewindeeingriff oder/und Einpressen oder/und Materialschluss festgelegte Führungsbolzen bereitgestellt sein, welche mit radial erweiterten Bolzenköpfen entsprechende stufenartige Erweiterungen der Führungsöffnungen 38 übergreifen und somit auch einen Bewegungsanschlag für das jeweilige bewegbare Komprimierbackensegment 26 bzw. 28 in Richtung vom festen Komprimierbackensegment 22 weg bereitstellen.

Ferner umfasst die in Zuordnung zu jedem der bewegbaren Komprimierbackensegmente 26, 28 vorgesehene Führungsformation 34 eine Führungsfläche 40 an der Trägerplatte 19. An dieser Führungsfläche 40 kann das jeweilige bewegbare Komprimierbackensegment 26, 28 mit seiner von der Komprimierfläche 18 abgewandten Rückseite insbesondere dann, wenn ein rohrartiges Metallteil durch radiale Beaufschlagung komprimiert werden soll, sich abstützen, so dass den Führungselementen 36 im Wesentlichen die Funktion der Führung eines jeweiligen bewegbaren Komprimierbackensegment 26, 28 in der Bewegungsrichtung B zukommt, diese Führungselemente 36 jedoch im Wesentlichen keine orthogonal zur Bewegungsrichtung B orientierten Kräfte bei Durchführung eines Komprimiervorgangs aufnehmen müssen.

Zwischen jedem der bewegbaren Komprimierbackensegmente 26, 28 und dem festen Komprimierbackensegment 22 wirkt eine das jeweilige bewegbare Komprimierbackensegment 26, 28 in der Bewegungsrichtung B vom festen Komprimierbackensegment 22 weg vorspannende Vorspannanordnung 42. Die jeweilige Vorspannanordnung 42 umfasst wenigstens ein in der Komprimierbacken-Längsrichtung L_{B} langgestrecktes Vorspannelement 44, z.B. ein radial komprimierbares, rohrartiges oder stabartiges Federelement aus Elastomermaterial, z.B. PU-Material, oder dergleichen. Beispielsweise kann die Erstreckungslänge eines derartigen Vorspannelements 44 im Wesentlichen auch der Erstreckungslänge der über dieses bezüglich einander vorgespannten Komprimierbackensegmente 22, 26, 28 entsprechen. Auch kann ein derartiges Vorspannelement 44 in mehrere voneinander getrennt bereitgestellte Segmente aufgeteilt sein.

In Zuordnung zu jedem derartigen langgestreckten Vorspannelement 44 ist im festen Komprimierbackensegment 22 bzw. dem jeweiligen bewegbaren Komprimierbackensegment 26, 28 eine Vorspannelement-Aufnahmeeinsenkung 46 bzw. 48 ausgebildet. In jede dieser Vorspannelement-Aufnahmeeinsenkungen 46, 48 greift das zugeordnete Vorspannelement 44 teilweise ein, so dass eine definierte Positionierung des Vorspannelements 44 bezüglich der beiden durch dieses beaufschlagten Komprimierbackensegmente 22, 26, 28 vorgesehen ist. Auch die Vorspannelement-Aufnahmeeinsenkungen 46, 48 können sich über die gesamte Länge der Komprimierbackensegmente 22, 26, 28 erstreckend ausgebildet sein.

Durch die Vorspannanordnungen 42 bzw. deren Vorspannelemente 44 sind die beiden bewegbaren Komprimierbackensegmente 26, 28 in der Bewegungsrichtung B in Richtung von dem festen Komprimierbackensegment 22 und somit auch in Richtung voneinander weg vorgespannt, so dass sie grundsätzlich, also ohne externe Krafteinwirkung, einen Zustand maximalen Abstands zum festen Komprimierbackensegment 22 in der Bewegungsrichtung B bzw. in der Komprimierbacken-Querrichtung Q_{B} einnehmen. Wie bereits vorangehend ausgeführt, kann diese Positionierung durch die die bewegbaren Komprimierbackensegmente 26, 28 an einer weiteren Bewegung in der Bewegungsrichtung B in Richtung vom festen Komprimierbackensegment 22 weg hindernden Führungselemente 36 vorgegeben werden. Auch andere Bewegungsanschläge, beispielsweise an der Trägerplatte 19, können diese Positionierung der bewegbaren Komprimierbackensegmente 26, 28 vorgeben.

Jedes bewegbare Komprimierbackensegment 26, 28 weist ferner eine Abstützfläche 50 auf. Die Abstützfläche 50 ist im Wesentlichen derart orientiert, dass sie bezüglich der Komprimiervorrichtungslängsachse L radial orientiert ist, wobei diese Orientierung beispielsweise dann erreicht sein kann, wenn ein eine jeweilige Abstützfläche 50 bereitstellendes bewegbares Komprimierbackensegment 26 bzw. 28 in maximalem Ausmaß auf das feste Komprimierbackensegment 22 zu verschoben ist bzw. in der Komprimierbacken-Querrichtung Q_{B} sich daran abstützt. Ist ein jeweiliges bewegbares Komprimierbackensegment 26, 28 in der Bewegungsrichtung B in Richtung vom festen Komprimierbackensegment 22 in maximalem Ausmaß weg verschoben, kann eine durch eine Abstützfläche 50 aufgespannte Ebene zu einer die Komprimiervorrichtungslängsachse Lv und eine darauf orthogonal stehende Radiallinie aufgespannten Ebene seitlich verschoben sein, dazu jedoch im Wesentlichen parallel liegen.

Bei Durchführung eines Komprimierprozesses werden zunächst die in Fig. 1 erkennbaren Komprimierbackenbaugruppen 12 der Komprimiervorrichtung 10 nach radial außen verlagert, beispielsweise in derartigem Ausmaß, dass die bewegbaren Komprimierbackensegmente 26, 28 von in Umfangsrichtung um die Komprimiervorrichtungslängsachse Lv benachbarten Komprimierbackenbaugruppen 12 einander nicht berühren und jeweils den maximalen Abstand zum zugeordneten festen Komprimierbackensegment 22 aufweisen. In diesem Zustand der Komprimierbackenbaugruppen 12 kann dann ein zu komprimierendes rohrartiges Metallteil, beispielsweise ein aus Blechmaterial aufgebautes, rohrartiges Gehäuse, in den von den Komprimierbacken 16 der Komprimierbackenbaugruppen 12 umschlossenen Innenraum eingeführt und durch entsprechende Haltewerkzeuge definiert gehalten werden. Nachfolgend werden die Komprimierbackenbaugruppen 12 nach radial einwärts bewegt, wobei im Zuge dieser Bewegung zunächst zwischen den bewegbaren Komprimierbackensegmenten 26, 28 einander benachbarter Komprimierbackenbaugruppen 12 vorhandene Umfangsabstände abnehmen, bis die bewegbaren Komprimierbackensegmente 26, 28 von in Umfangsrichtung benachbarten Komprimierbackenbaugruppen 12 mit ihren Abstützflächen 50 zur Anlage aneinander kommen. Eine weitergehende Radialverlagerung der Komprimierbackenbaugruppen 12 führt dann dazu, dass die in Umfangsrichtung sich aneinander abstützenden bewegbaren Komprimierbackensegmente 26, 28 benachbarter Komprimierbackenbaugruppen 12 sich gegenseitig zur Bewegung in Umfangsrichtung auf das diesen jeweils zugeordnete feste Komprimierbackensegment 22 zu beaufschlagen. Dies hat zur Folge, dass bei fortgesetzter Verlagerung der Komprimierbackenbaugruppen 12 nach radial innen auch die zunächst zwischen den bewegbaren Komprimierbackensegmenten 26, 28 und dem jeweils zugeordneten festen Komprimierbackensegment 22 der Komprimierbacken 16 vorhandenen Umfangsabstände bzw. Abstände in Richtung der Komprimierbacken-Querrichtung Q_{B} abnehmen. Diese Radialverlagerung der Komprimierbackenbaugruppen 12 wird fortgesetzt, bis diese eine der angestrebten Abmessungsverringerung des zu komprimierenden Metallteils entsprechende Positionierung einnehmen. In diesem Zustand können zwischen den bewegbaren Komprimierbackensegmenten 26, 28 und den diesen jeweils zugeordneten festen Komprimierbackensegmenten 22 der jeweiligen Komprimierbacken 16 noch Abstände in der Bewegungsrichtung B bzw. der Komprimierbacken-Querrichtung Q_{B} vorhanden sein.

Mit dem vorangehend beschriebenen Aufbau einer Komprimierbackenbaugruppe bzw. einer eine Mehrzahl derartiger Komprimierbackenbaugruppen umfassenden Komprimiervorrichtung wird der in einem Ausgangszustand vor Durchführung der Radialverlagerung nach einwärts vorhandene bzw. zum Ermöglichen der Radialverlagerung erforderliche Umfangsabstand auf eine Vielzahl von zwischen einzelnen Komprimierbacken einerseits und zwischen Komprimierbackensegmenten der einzelnen Komprimierbacken andererseits gebildete Teil-Umfangsabstände aufgeteilt. Jeder dieser Teil-Umfangsabstände kann vergleichsweise klein dimensioniert sein, so dass über den Umfang verteilt keine längeren Umfangsabschnitte eines zu komprimierenden rohrartigen Metallteils vorhanden sind, in welchen dieses nach radial außen nicht gestützt ist bzw. von radial außen nicht beaufschlagt wird. Die Gefahr, dass bei einem derartigen Komprimierprozess Ausweichbewegungen eines zu komprimierenden Metallteils auftreten, die zu ungewünschten Verformungszuständen führen können, kann somit weitestgehend ausgeschlossen werden.

Es ist abschließend darauf hinzuweisen, dass bei dem vorangehend beschriebenen Aufbau verschiedenste Variationen vorgenommen werden können. So können beispielsweise bei den einzelnen Komprimierbacken beidseits eines jeweiligen festen Komprimierbackensegments mehrere bewegbare Komprimierbackensegmente aufeinander folgend vorgesehen sein. Beispielsweise können beidseits eines jeweiligen festen Komprimierbackensegments jeweils zwei bewegbare Komprimierbackensegmente vorgesehen sein, wobei das auf das feste Komprimierbackensegment folgende bewegbare Komprimierbackensegment über eine Vorspannanordnung am festen Komprimierbackensegment abgestützt und von diesem weg vorgespannt ist und zwischen den beiden bewegbaren Komprimierbackensegmenten eine weitere Vorspannanordnung wirkt, welche diese in Richtung voneinander weg vorspannt. Die Führung mehrerer derartiger aufeinanderfolgender bewegbarer Komprimierbackensegmente kann durch eine Führungsformation realisiert sein, wie sie vorangehend mit Bezug auf die Fig. 2 beschrieben wurde. Eine derartige ein oder mehrere bewegbare Komprimierbackensegmente führende Führungsformation könnte auch eine andere Anzahl an Führungselementen aufweisen. Beispielsweise könnten drei Führungselemente beispielsweise in Richtung der Komprimierbacken-Längsrichtung aufeinanderfolgend vorgesehen sein. Auch könnten die Führungselemente und damit auch die diese aufnehmenden Führungsöffnungen im Wesentlichen orthogonal zu einer durch die Komprimierbacken-Längsrichtung und die Komprimierbacken-Querrichtung aufgespannten Ebene, also im Wesentlichen in einer Komprimierbacken-Radialrichtung, zueinander versetzt liegen.

Auch ist es selbstverständlich, dass, abhängig von der Außenumfangsgeometrie eines zu komprimierenden Metallteils, in einer in Fig. 1 dargestellten Komprimiervorrichtung auch Komprimierbacken eingesetzt werden können, bei welchen die daran jeweils vorgesehenen Komprimierflächen zueinander unterschiedliche Krümmungen aufweisen. Beispielsweise könnten bei Bearbeitung eines rohrartigen Metallteils mit im Wesentlichen elliptischer Querschnittsgeometrie dort, wo dieses einen geringeren Krümmungsradius aufweist, Komprimierbackensegmente mit entsprechend geringerem Krümmungsradius der jeweiligen Komprimierfläche eingesetzt werden. Dort, wo ein derartiges rohrartiges Metallteil einen größeren Krümmungsradius aufweist, können Komprimierbackensegmente mit entsprechend größerem Krümmungsradius der daran vorgesehenen Komprimierfläche eingesetzt werden. Die gekrümmte Struktur der Komprimierflächen kann beispielsweise auch dadurch bereitgestellt werden, dass an den Komprimierbackensegmenten einer jeweiligen Komprimierbacke vorgesehene Komprimierflächensegmente nicht gekrümmt, zueinander jedoch angewinkelt sind, so dass eine gekrümmte Struktur durch eine polygonzugartige Struktur angenähert wird.

## Patentansprüche

1. Komprimierbackenbaugruppe (12) für eine Komprimiervorrichtung (10) zum Komprimieren rohrartiger Metallteile, umfassend:
- einen Komprimierbackenträger (17),
- wenigstens eine an dem Komprimierbackenträger (17) vorgesehene Komprimierbacke (16) mit einer in einer Komprimierbacken-Querrichtung (Q_{B}) quer zu einer Komprimierbacken-Längsrichtung (L_{B}) gekrümmten Komprimierfläche (18),
wobei die Komprimierbacke (16) ein an dem Komprimierbackenträger (17) feststehendes, ein Komprimierflächensegment (24) bereitstellendes festes Komprimierbackensegment (22) und wenigstens ein ein Komprimierflächensegment (30, 32) bereitstellendes bewegbares Komprimierbackensegment (26, 28) umfasst, wobei das wenigstens eine bewegbare Komprimierbackensegment (26, 28) bezüglich des festen Komprimierbackensegments (22 in einer Bewegungsrichtung (B) bewegbar ist, wobei die gekrümmte Komprimierfläche (18) vom Komprimierbackenträger (17) abgewandt orientiert ist, **dadurch gekennzeichnet, dass** das wenigstens eine bewegbare Komprimierbackensegment (26, 28) bezüglich des festen Komprimierbackensegments (22) gegen die Vorspannwirkung einer Vorspannanordnung (42) bewegbar ist.

2. Komprimierbackenbaugruppe (12) nach Anspruch 1, **dadurch gekennzeichnet, dass** das feste Komprimierbackensegment (22) und das wenigstens eine bewegbare Komprimierbackensegment (26, 28) in der Komprimierbacken-Querrichtung (Q_{B}) aufeinanderfolgend angeordnet sind.

3. Komprimierbackenbaugruppe (12) nach Anspruch 1 oder 2, **dadurch gekennzeichnet, dass** in der Komprimierbacken-Querrichtung (Q_{B}) an jeder Seite des festen Komprimierbackensegments (22) wenigstens ein bewegbares Komprimierbackensegment (26, 28) angeordnet ist.

4. Komprimierbackenbaugruppe (12) nach einem der vorangehenden Ansprüche, **dadurch gekennzeichnet, dass** durch die Vorspannanordnung (42) das wenigstens eine bewegbare Komprimierbackensegment (26, 28) in der Bewegungsrichtung (B) von dem festen Komprimierbackensegment (22) weg vorgespannt ist.

5. Komprimierbackenbaugruppe (12) nach einem der vorangehenden Ansprüche, **dadurch gekennzeichnet, dass** die Vorspannanordnung (42) in Zuordnung zu jedem bewegbaren Komprimierbackensegment (26, 28) wenigstens ein dieses in Richtung vom festen Komprimierbackensegment (22) weg beaufschlagendes Vorspannelement (44) umfasst.

6. Komprimierbackenbaugruppe (12) nach Anspruch 5, **dadurch gekennzeichnet, dass** zwischen dem festen Komprimierbackensegment (22) und wenigstens einem, vorzugsweise jedem in der Komprimierbacken-Querrichtung (Q_{B}) diesem benachbarten bewegbaren Komprimierbackensegment (26, 28) wenigstens ein an dem festen Komprimierbackensegment (22) und dem wenigstens einen benachbarten bewegbaren Komprimierbackensegment (26, 28) sich abstützendes Vorspannelement (44) vorgesehen ist.

7. Komprimierbackenbaugruppe (12) nach Anspruch 6, **dadurch gekennzeichnet, dass** in dem festen Komprimierbackensegment (22) oder/und dem wenigstens einen benachbarten bewegbaren Komprimierbackensegment (26, 28) eine in der Komprimierbacken-Längsrichtung (L_{B}) langgestreckte, das wenigstens eine an dem festen Komprimierbackensegment (22) und dem wenigstens einen benachbarten bewegbaren Komprimierbackensegment (26, 28) sich abstützende Vorspannelement (44) teilweise aufnehmende Vorspannelement-Aufnahmeeinsenkung (46, 48) vorgesehen ist.

8. Komprimierbackenbaugruppe (12) nach einem der vorangehenden Ansprüche, **dadurch gekennzeichnet, dass** dem wenigstens einen bewegbaren Komprimierbackensegment (26, 28) eine dieses zur Bewegung bezüglich des festen Komprimierbackensegments (22) in der Bewegungsrichtung (B) führende Komprimierbackensegment-Führungsformation (34) zugeordnet ist.

9. Komprimierbackenbaugruppe (12) nach Anspruch 8, **dadurch gekennzeichnet, dass** die Führungsformation (34) wenigstens ein an dem festen Komprimierbackensegment (22) im Wesentlichen in der Bewegungsrichtung (B) sich erstreckend getragenes Führungselement (36) und in dem wenigstens einen bewegbaren Komprimierbackensegment (26, 28) in Zuordnung zu dem wenigstens einen Führungselement (36) eine dieses in der Bewegungsrichtung (B) bewegbar aufnehmende Führungsöffnung (38) umfasst, oder/und dass die Führungsformation (34) eine das wenigstens eine bewegbare Komprimierbackensegment (26, 28) an seiner von der Komprimierfläche (18) abgewandten Rückseite stützende Stützfläche (40) umfasst.

10. Komprimierbackenbaugruppe (12) nach Anspruch 9, **dadurch gekennzeichnet, dass** die Führungsformation (34) wenigstens zwei in der Komprimierbacken-Längsrichtung (L_{B}) oder/und einer zur Komprimierbacken-Querrichtung (Q_{B}) und zur Komprimierbacken-Längsrichtung (L_{B}) orthogonalen Komprimierbacken-Radialrichtung in Abstand zueinander angeordnete Führungselemente (36) umfasst.

11. Komprimierbackenbaugruppe (12) nach einem der vorangehenden Ansprüche, **dadurch gekennzeichnet, dass** der Komprimierbackenträger (17) eine Trägerplatte (19) umfasst.

12. Komprimierbackenbaugruppe (12) nach einem der vorangehenden Ansprüche, **dadurch gekennzeichnet, dass** die Komprimierbacke (16) bezüglich einer zur Komprimierbacken-Querrichtung (Q_{B}) orthogonalen Komprimierbacken-Mittenebene hinsichtlich der Ausgestaltung der Komprimierbackensegmente (22, 26, 28) im Wesentlichen spiegelsymmetrisch ausgebildet ist.

13. Komprimierbackenbaugruppe (12) nach einem der vorangehenden Ansprüche, **dadurch gekennzeichnet, dass** die Komprimierfläche (18) in der Komprimierbacken-Längsrichtung (L_{B}) nicht gekrümmt ist.

14. Komprimierbackenbaugruppe (12) nach einem der vorangehenden Ansprüche, **dadurch gekennzeichnet, dass** wenigstens ein, vorzugsweise jedes bewegbare Komprimierbackensegment (26, 28) an seiner von dem festen Komprimierbackensegment (22) in der Komprimierbacken-Querrichtung (Q_{B}) abgewandt liegenden Seite eine bezüglich eines Krümmungsmittelpunktes der Komprimierfläche (18) im Wesentlichen radial sich erstreckende und in der Komprimierbacken-Längsrichtung (L_{B}) sich erstreckende Abstützfläche (50) zur Abstützung an einem bewegbaren Komprimierbackensegment (26, 28) einer Komprimierbacke (16) einer benachbarten Komprimierbackenbaugruppe (12) aufweist.

15. Komprimiervorrichtung (10) zum Komprimieren rohrartiger Metallteile, insbesondere für eine Abgasanlage einer Brennkraftmaschine, umfassend eine Mehrzahl von in Umfangsrichtung um eine Komprimiervorrichtungslängsachse (Lv) aufeinanderfolgend angeordneten und bezüglich der Komprimiervorrichtungslängsachse (Lv) im Wesentlichen radial bewegbaren Komprimierbackenbaugruppen (12) nach einem der vorangehenden Ansprüche.

## Claims

1. Compressing jaw assembly unit (12) for a compressing device (10) for compressing tubular metal parts, comprising:
- a compressing jaw carrier (17),
- at least one compressing jaw (16), provided at the compressing jaw carrier (17) with a compressing surface (18) curved transversely to a compressing jaw longitudinal direction (L_{B}) in a compressing jaw transverse direction (Q_{B}),
wherein the compressing jaw (16) comprises a fixed compressing jaw segment (22), which is fixed to the compressing jaw carrier (17) and provides a compressing surface segment (24), and at least one movable compressing jaw segment (26, 28) providing a compressing surface segment (30, 32), wherein the at least one movable compressing surface segment (26, 28) can be moved in a direction of movement (B) in relation to the fixed compressing jaw segment (22), wherein the curved compressing surface (18) is oriented facing away from the compressing jaw carrier (17), **characterized in that** the at least one movable compressing jaw segment (26, 28) is in relation to the fixed compressing surface segment (22) movable against the prestressing action of a prestressing device (42).

2. Compressing jaw assembly unit (12) in accordance with claim 1, **characterized in that** the fixed compressing jaw segment (22) and the at least one movable compressing jaw segment (26, 28) are arranged following one another in the compressing jaw transverse direction (Q_{B}).

3. Compressing jaw assembly unit (12) in accordance with claim 1 or 2, **characterized in that** at least one movable compressing jaw segment (26, 28) is arranged on each side of the fixed compressing jaw segment (22) in the compressing jaw transverse direction (Q_{B}).

4. Compressing jaw assembly unit (12) in accordance with one of the above claims, **characterized in that** the at least one movable compressing jaw segment (26, 28) is prestressed by the prestressing device (42) in the direction of movement (B) away from the fixed compressing jaw segment (22).

5. Compressing jaw assembly unit (12) in accordance with one of the above claims, **characterized in that** associated with each movable compressing jaw segment (26, 28) the prestressing device (42) comprises at least one prestressing element (44) acting on this movable compressing jaw segment in the direction away from the fixed compressing jaw segment (22).

6. Compressing jaw assembly unit (12) in accordance with claim 5, **characterized in that** at least one prestressing element (44), which is supported at the fixed compressing jaw segment (22) and at the at least one adjacent movable compressing jaw segment (26, 28), is provided between the fixed compressing jaw segment (22) and at least one movable compressing jaw segment, preferably each movable compressing jaw segment (26, 28) which is adjacent to this fixed compressing segment (22) in the compressing jaw transverse direction (Q_{B}).

7. Compressing jaw assembly unit (12) in accordance with claim 6, **characterized in that** a prestressing element mounting recess (46, 48), which is elongated in the compressing jaw longitudinal direction (L_{B}) and partly receives the at least one prestressing element (44), which is supported at the fixed compressing jaw segment (22) and at the at least one adjacent movable compressing jaw segment (26, 28), is provided in the fixed compressing jaw segment (22) or/and in the at least one adjacent movable compressing jaw segment (26, 28).

8. Compressing jaw assembly unit (12) in accordance with one of the above claims, **characterized in that** a compressing jaw segment guide formation (34), which guides the at least one movable compressing jaw segment (26, 28) for movement in relation to the fixed compressing jaw segment (22) in the direction of movement (B), is associated with the at least one movable compressing jaw segment (26, 28).

9. Compressing jaw assembly unit (12) in accordance with claim 8, **characterized in that** the guide formation (34) comprises at least one guide element (36), which is carried on the fixed compressing jaw segment (22) extending essentially in the direction of movement (B), and a guide opening (38), which movably receives this guide element (36) in the direction of movement (B), in the at least one movable compressing jaw segment (26, 28) associated with the at least one guide element (36), or/and that the guide formation (34) comprises a support surface (40), which supports the at least one movable compressing jaw segment (26, 28) on its rear side facing away from the compressing surface (18).

10. Compressing jaw assembly unit (12) in accordance with claim 9, **characterized in that** the guide formation (34) comprises at least two guide elements (36), which are arranged at spaced locations from one another in the compressing jaw longitudinal direction (L_{B}) or/and in a compressing jaw radial direction at right angles to the compressing jaw transverse direction (Q_{B}) and to the compressing jaw longitudinal direction (L_{B}).

11. Compressing jaw assembly unit (12) in accordance with one of the above claims, **characterized in that** the compressing jaw carrier (17) comprises a carrier plate (19).

12. Compressing jaw assembly unit (12) in accordance with one of the above claims, **characterized in that** the compressing jaw (16) has an essentially mirror-symmetrical configuration in respect to the configuration of the compressing jaw segments (22, 26, 28) in relation to a compressing jaw central plane, which is at right angles to the compressing jaw transverse direction (Q_{B}).

13. Compressing jaw assembly unit (12) in accordance with one of the above claims, **characterized in that** the compressing surface (18) is not curved in the compressing jaw longitudinal direction (L_{B}).

14. Compressing jaw assembly unit (12) in accordance with one of the above claims, **characterized in that** at least one movable compressing jaw segment, preferably each movable compressing jaw segment (26, 28) has on its side facing away from the fixed compressing jaw segment (22) in the compressing jaw transverse direction (Q_{B}) a support surface (50), which extends essentially radially in relation to a center of curvature of the compressing surface (18) and extends in the compressing jaw longitudinal direction (L_{B}), for the support at a movable compressing jaw segment (26, 28) of the compressing jaw (16) of an adjacent compressing jaw assembly unit (12).

15. Compressing device (10) for compressing tubular metal parts, especially for an exhaust system of an internal combustion engine, comprising a plurality of compressing jaw assembly units (12) in accordance with one of the above claims, which are arranged following one another about a compressing device longitudinal axis (L_{V}) in the circumferential direction and can be moved essentially radially in relation to the compressing device longitudinal axis (Lv).

## Revendications

1. Module de mâchoire de compression (12) pour un dispositif de compression (10) destiné à comprimer des pièces métalliques tubulaires, comprenant :
- un support de mâchoires de compression (17),
- au moins une mâchoire de compression (16), prévue sur le support de mâchoire de compression (17) avec une surface de compression (18) incurvée transversalement à une direction longitudinale de la mâchoire de compression (L_{B}) dans une direction transversale de la mâchoire de compression (Q_{B}),
dans lequel la mâchoire de compression (16) comprend un segment de mâchoire de compression fixe (22), qui est fixé au support de mâchoire de compression (17) et fournit un segment de surface de compression (24), et au moins un segment de mâchoire de compression mobile (26, 28) fournissant un segment de surface de compression (30, 32), dans lequel ledit au moins un segment de surface de compression mobile (26, 28) peut être déplacé dans une direction de mouvement (B) par rapport au segment de mâchoire de compression fixe (22), dans lequel la surface de compression (18) incurvée est orientée à l'opposé du support de mâchoire de compression (17), **caractérisé en ce que** ledit au moins un segment de mâchoire de compression mobile (26, 28) est, par rapport au segment de mâchoire de compression fixe (22), mobile contre l'action de précontrainte d'un dispositif de précontrainte (42).

2. Module de mâchoire de compression (12) selon la revendication 1, **caractérisée en ce que** le segment de mâchoire de compression fixe (22) et ledit au moins un segment de mâchoire de compression mobile (26, 28) sont disposés l'un derrière l'autre dans la direction transversale de la mâchoire de compression (Q_{B}).

3. Module de mâchoire de compression (12) selon la revendication 1 ou 2, **caractérisée en ce qu'**au moins un segment de mâchoire de compression mobile (26, 28) est disposé de chaque côté du segment de mâchoire de compression fixe (22) dans la direction transversale de la mâchoire de compression (Q_{B}).

4. Module de mâchoire de compression (12) selon l'une des revendications précédentes, **caractérisée en ce que** ledit au moins un segment de mâchoire de compression mobile (26, 28) est précontraint par le dispositif de précontrainte (42) dans la direction de mouvement (B) à l'écart du segment de mâchoire de compression fixe (22).

5. Module de mâchoire de compression (12) selon l'une des revendications précédentes, **caractérisée en ce que** le dispositif de précontrainte (42) associé à chaque segment de mâchoire de compression mobile (26, 28) comprend au moins un élément de précontrainte (44) agissant sur ce segment de mâchoire de compression mobile dans la direction opposée au segment de mâchoire de compression fixe (22).

6. Module de mâchoire de compression (12) selon la revendication 5, **caractérisée en ce qu'**au moins un élément de précontrainte (44), qui est supporté sur le segment de mâchoire de compression fixe (22) et sur ledit au moins un segment de mâchoire de compression mobile adjacent (26, 28), est prévu entre le segment de mâchoire de compression fixe (22) et au moins un segment de mâchoire de compression mobile, de préférence chaque segment de mâchoire de compression mobile (26, 28) qui est adjacent à ce segment de compression fixe (22) dans la direction transversale de la mâchoire de compression (Q_{B}).

7. Module de mâchoire de compression (12) selon la revendication 6, **caractérisée en ce qu'**un évidement de montage d'élément de précontrainte (46, 48), qui est allongé dans la direction longitudinale de la mâchoire de compression (L_{B}) et reçoit partiellement ledit au moins un élément de précontrainte (44), qui est supporté sur le segment de mâchoire de compression fixe (22) et sur ledit au moins un segment de mâchoire de compression mobile adjacent (26, 28), est prévu dans le segment de mâchoire de compression fixe (22) et/ou dans ledit au moins un segment de mâchoire de compression mobile adjacent (26, 28).

8. Module de mâchoire de compression (12) selon l'une des revendications précédentes, **caractérisée en ce qu'**une formation de guidage de segment de mâchoire de compression (34) est associée à au moins un segment de mâchoire de compression mobile (26, 28), qui guide le segment de mâchoire de compression mobile (26, 28) dans la direction de mouvement (B) par rapport au segment de mâchoire de compression fixe (22).

9. Module de mâchoire de compression (12) selon la revendication 8, **caractérisée en ce que** la formation de guidage (34) comprend au moins un élément de guidage (36), qui est supporté sur le segment de mâchoire de compression fixe (22) s'étendant essentiellement dans la direction de mouvement (B), et une ouverture de guidage (38), qui reçoit de manière mobile cet élément de guidage (36) dans la direction de mouvement (B), dans ledit au moins un segment de mâchoire de compression mobile (26, 28) associé audit au moins un élément de guidage (36), ou/et que la formation de guidage (34) comprend une surface d'appui (40), qui soutient ledit au moins un segment de mâchoire de compression mobile (26, 28) sur son côté arrière opposé à la surface de compression (18).

10. Module de mâchoire de compression (12) selon la revendication 9, **caractérisée en ce que** la formation de guidage (34) comprend au moins deux éléments de guidage (36) qui sont disposés à distance l'un de l'autre dans la direction longitudinale de la mâchoire de compression (L_{B}) et/ou dans une direction radiale de la mâchoire de compression perpendiculaire à la direction transversale de la mâchoire de compression (Q_{B}) et à la direction longitudinale de la mâchoire de compression (L_{B}).

11. Module de mâchoire de compression (12) selon l'une des revendications précédentes, **caractérisée en ce que** le support de mâchoire de compression (17) comprend une plaque de support (19).

12. Module de mâchoire de compression (12) selon l'une des revendications précédentes, **caractérisée en ce que** la mâchoire de compression (16) présente une configuration essentiellement symétrique par rapport à la configuration des segments de mâchoire de compression (22, 26, 28) par rapport à un plan central de la mâchoire de compression, qui est perpendiculaire à la direction transversale de la mâchoire de compression (Q_{B}).

13. Module de mâchoire de compression (12) selon l'une des revendications précédentes, **caractérisée en ce que** la surface de compression (18) n'est pas incurvée dans la direction longitudinale de la mâchoire de compression (L_{B}).

14. Module de mâchoire de compression (12) selon l'une des revendications précédentes, **caractérisée en ce qu'**au moins un segment de mâchoire de compression mobile, de préférence chaque segment de mâchoire de compression mobile (26, 28), présente sur son côté opposé au segment de mâchoire de compression fixe (22) dans la direction transversale de la mâchoire de compression (Q_{B}) une surface d'appui (50), qui s'étend essentiellement radialement par rapport à un centre de courbure de la surface de compression (18) et s'étend dans la direction longitudinale de la mâchoire de compression (L_{B} ), pour le support au niveau d'un segment de mâchoire de compression mobile (26, 28) d'une mâchoire de compression (16) d'une module de mâchoire de compression adjacente (12).

15. Dispositif de compression (10) pour comprimer des pièces métalliques tubulaires, en particulier pour une installation de gaz d'échappement d'un moteur à combustion interne, comprenant une pluralité de modules de mâchoire de compression (12) selon l'une des revendications précédentes, qui sont disposées les unes derrière les autres autour d'un axe longitudinal (L_{V} ) du dispositif de compression dans la direction circonférentielle et qui peuvent être déplacées sensiblement radialement par rapport à l'axe longitudinal (L_{V} ) du dispositif de compression.
